# EUROPEAN PATENT SPECIFICATION

(11) **EP 2 306 770 B1**
(45) Date of publication and mention of the grant of the patent: **13.11.2013**
(21) Application number: 10011824.9
(22) Date of filing: 29.09.2010
(51) Int. Cl.: H04W 36/14

(54) **Heterogeneous communciation system and method for circuit switched handover**
Heterogenes Kommunikationssystem und Verfahren für leitungsvermittelte Übergabe
Système de communication hétérogène et procédé pour transfert commuté de circuit

(30) Priority: 30.09.2009 KR 20090093296
(43) Date of publication of application: 06.04.2011
(73) Proprietor: Postech Academy-Industry- Foundation, Nam-gu Pohang-city, Kyungsangbuk-gu (KR); Samsung Electronics Co., Ltd., Suwon-si, Gyeonggi-do, 443-742 (KR)
(72) Inventor: Lim, Wan-Seon, Kyungsangbuk-do (KR); Lee, Jeong-Yoon, Uiwang-si Gyeonggi-do (KR); Kim, Dong-Wook, Daegu (KR); Suh, Young-Joo, Pohang-shi Kyungsangbuk-do (KR)
(74) Representative: Samson & Partner

(56) References cited:
- EP-A1- 2 192 734
- NGUYEN-VUONG ET AL: "An Architecture for UMTS-WIMAX Interworking", BROADBAND CONVERGENCE NETWORKS, 2006. BCN 2006. THE 1ST INTERNATIONAL WORKSHOP ON VANCOUVER, CANADA 07-07 APRIL 2006, PISCATAWAY, NJ, USA,IEEE, 1 January 2006 (2006-01-01), pages 1-10, XP031101752, DOI: DOI:10.1109/BCN.2006.1662289 ISBN: 978-1-4244-0146-8
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 8)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.8.0, 1 March 2009 (2009-03-01), pages 1-157, XP050377583,

## Description

The present invention relates to a system and method for handover between heterogeneous networks, and more particularly, to a heterogeneous communication system of Long Term Evolution (LTE) communication system and Worldwide interoperability for Microwave Access (WiMAX) communication system for providing a circuit switched (CS) service therebetween and a method therefor.

A wireless communication technique, allowing users to communicate with each other without restrictions to locations or wires, started in the form of supporting voice services, but has been advanced to support high speed packet data. Research and development are being conducted to enable the Internet and various other techniques to interwork.

One of the most typical communication schemes among the wireless communication techniques is a 3rd generation mobile communication system using a cellular system. As the 3rd generation mobile communication system, 3GPP2 (3rd generation partnership project 2) of a North American scheme, has been already commercialized, and 3GPP of a European scheme, has almost reached a commercialization phase. The standard proposed by the European scheme is called 3GPP-LTE (3GPP-Long Term Evolution), and currently, most parts of the 3GPP-LTE are under standardization.

Another communication scheme may be Worldwide interoperability for Microwave Access (WiMAX), which proposes to perform communication by using orthogonal frequency division multiple access (OFDMA). The WiMAX has a wider bandwidth than that of the existing 3rd generation mobile communication system and utilizes more resources. As it is advantageous to high speed and large capacity data communication, commercialization of the WiMAX scheme has been accelerated.

Meanwhile, when a 3GPP-LTE network and a WiMAX network are integrated, users can selectively use a network suitable for a current situation in an integrated network environment. -For example, in case of integrated 3GPP-LTE/WiMAX networks, a user is currently served by a network, e.g., 3GPP-LTE network that offers the best performance, and when the user gets out of the service area of the currently served network according to his or her movement, the user may be served by another available network, e.g., a WiMAX network. The sequential operational process occurring during the network change is called handover.

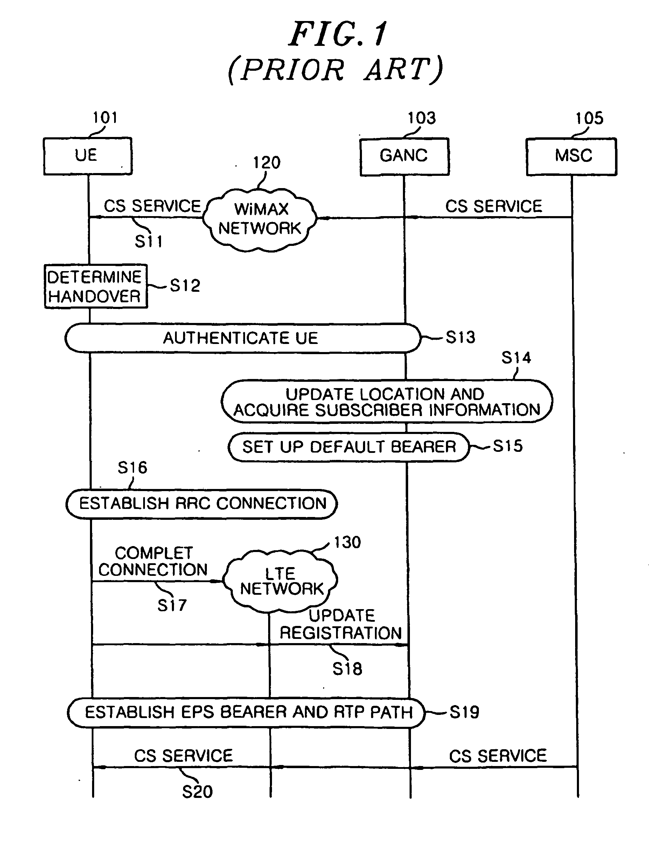

Fig. 1 is a flowchart illustrating the sequential process of receiving CS data in performing handover from a WiMAX access network 120 to an LTE access network 130 according to the prior art.

Specifically, when a user equipment (UE) 101 accesses the WiMAX network 120 at an early stage, it receives a CS service through a generic access network controller (GANC) 103 from a serving mobile switching center (MSC) 105 in step S11. In this case, when the UE 101 determines that the WiMAX network 120 is currently in a poor condition not enough to smoothly provide the CS service, the UE 101 determines to perform handover in step S12 and may attempt to access the LTE network 130.

While the UE 101 is accessing the LTE network 130, a UE authentication is performed in step S13, location is updated and subscriber information is retrieved in step S14, and a default bearer is set up in step S15 and a connection of a radio resource control (RRC) is established in step S16. And then, the process of accessing the LTE network 130 is completed in step S17.

Thereafter, when the UE 101 updates a registration to the GANC 103 in step S18, an evolved packet system (EPS) bearer for the CS service is established and a real-time transport protocol (RTP) path is also established in step S19. Thus, after this process, the GANC 103 can provide the CS service to the UE 101 located in the LTE network 130 in step 1300.

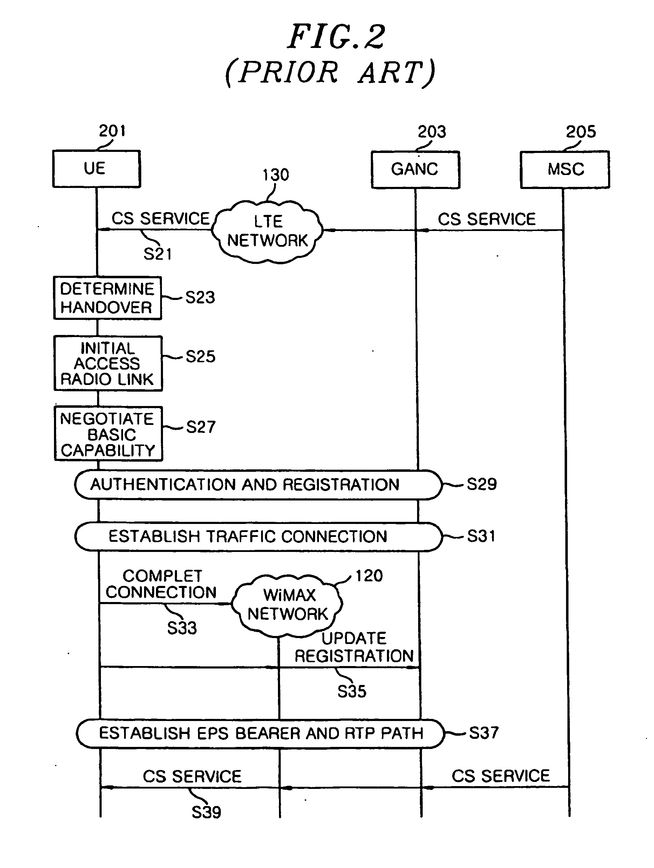

Fig. 2 is a flowchart illustrating the sequential process of receiving CS data in performing handover from the LTE network 130 to the WiMAX network 120 according to the prior art.

Specifically, when a UE 201 accesses the LTE network 130 at an early stage, it receives a CS service through a GANC 203 from a serving MSC 205 in step S21. In this case, when the UE 201 determines that the LTE network 130 is in a poor condition insufficient to smoothly provide the CS service, it determines to perform handover in step S23 and may attempt to access the WiMAX network 120.

While the UE 201 is accessing the WiMAX network 120, a radio link initial access (synchronization and ranging) is performed in step S25, a basic capability negotiation is performed in step S27, an UE authentication and registration is performed in step S29, a traffic connection establishment is made in step S31, and the like. And then, the process of accessing the WiMAX network 120 is completed in step S33.

Thereafter, when the UE 201 updates a registration to the GANC 203 in step S35, an EPS bearer for the CS service is established and an RTP path is also established in step S37. Thus, after this process, the GANC 203 can provide the CS service to the UE 201 present in the WiMAX network 120 in step S39.

However, according to the prior arts discussed above, when the UE performs the handover from the WiMAX network 120 to the LTE network 130 or when the UE performs the handover from the LTE network 130 to the WiMAX network 120, the required process, such as resource allocation, to perform registration and receive data in the new network needs to be performed, which causes a discontinuation of the CS service. That is, the discontinuation of the CS service occurs between a point when the UE attempts to access the LTE network or the WiMAX network in performing handover and a point when the RTP path is established between the UE and the GANC.

EP 2 192 734 A1 respectively CN 101 374 341 A disclose a heterogeneous communication system according to the preamble of claim 1.

Further, document NGUYEN-VUONG ET AL: "An Architecture for UMTS-WIMAX Interworking", (BROADBAND CONVERGENCE NETWORKS, 2006. BCN 2006. THE 1ST INTERNATIONAL WORKSHOP ON VANCOUVER, CANADA 07-07 APRIL 2006, PISCATAWAY, NJ, USA, IEEE, 1 January 2006 (2006-01-01), pages 1-10, XP031101752, DOI: DOI:10.1109/BCN.2006.1662289 ISBN: 978-1-4244-0146-8) refers to next generation networks with wireless access abilities which provide an automatic handovers for moving devices in the heterogeneous networks combining different access technologies. This document discloses a possible UMTS-WIMAX interworking architecture based on the 3GPP standards and proposes a seamless inter-system handover scheme which enables the service continuity with low handover latency and packet loss.

Further, document "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 8)", (3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, no. V8.8.0, 1 March 2009 (2009-03-01), pages 1-157, XP050377583) discloses and describes the E-UTRAN radio interface protocol architecture.

While the invention is defined in the independent claim, further aspects of the invention are set forth in the dependent claims, the drawings and the following description.

The present invention provides a heterogeneous communication system of a LTE and a WiMAX communication system for providing a circuit switched (CS) service and a method therefor, which are capable of reducing a discontinuation of the CS service in performing the handover.

In accordance with a first aspect of the present invention, there is provided a heterogeneous communication system of performing a handover from a first communication system to a second communication system integrated therein, the heterogeneous communication system including:
a user equipment (UE) adapted to request a handover connection establishment to the second communication system while receiving a CS (Circuit Switch) service from the first communication system, request an authentication to the first communication system, perform the handover to the second communication system after the authentication, and then disconnect a connection with the first communication system and switch to the second communication system in response to a handover command message, sequentially; and
a generic access network controller (GANC) adapted to deliver the request of the handover connection establishment to the second communication system, notify the procedure of the authentication to the second communication system, and then provide the handover command message to the UE to switch to the second communication system, thereby providing the CS service to the UE through the second communication system, sequentially.

In the apparatus, the first communication system is a worldwide interoperability for microwave access (WiMAX) communication system and the second communication system is a long term evolution (LTE) communication system.

In accordance with a second aspect of the present invention, there is provided a heterogeneous communication system of performing a handover from a first communication system to a second communication system integrated therein, the heterogeneous communications system including:
a user equipment (UE) adapted to form an authentication with the second communication system, perform a handover preparation to the second communication system to establish a traffic connection for the CS service, disconnect a connection with the first communication system and switch to the second communication system, and then perform a radio link initial access and basic capability negotiation with the second communication system, sequentially; and
a generic access network controller (GANC) adapted to deliver a message related to the authentication to the second communication system, after the authentication is performed, transmit a context information for the UE to the second communication system to establish the traffic connection, and then perform a registration update and establish the RTP path with the UE to provide the CS service, thereby providing the CS service to the UE through the second communication system, sequentially.

In the apparatus, the first communication system is a long term evolution (LTE) communication system and the second communication system is a worldwide interoperability for microwave access (WiMAX) communication system.

In accordance with a third aspect of the present invention, there is provided a method for performing a handover from a first communication system to a second communication system in a heterogeneous communication system having a generic access network controller (GANC), the method including the sequential steps of:
in the GANC, delivering a request of a handover connection establishment from a user equipment (UE), which receives a CS (Circuit Switched) service from the first communication system, to the second communication system;
in the GANC, notifying an authentication between the UE and the first communication system to the second communication via the GANC;
in the UE, performing the handover of the UE to the second communication system through the first communication system after a connection to the second communication system is completed;
in the UE, in response to a handover command message, disconnecting a connection to the first communication system and switching to the second communication system; and
in the UE, performing a resource reservation to the second communication system to receive the CS service from the first communication system through the second communication system via the GANC.
In the method, the first communication system is a worldwide interoperability for microwave access (WiMAX) communication system and the second communication system is a long term evolution (LTE) communication system.

In accordance with a fourth aspect of the present invention, there is provided a method for performing a handover from a first communication system to a second communication system in a heterogeneous communication system having a generic access network controller (GANC), the method including the sequential steps of:
in the GANC, delivering an authentication-related message between the second communication system and a user equipment (UE), which receives a CS (Circuit Switched) service from the first communication system;
in the UE, delivering a handover preparation message to the second communication system via the GANC to establish a traffic connection for the CS service after the authentication;
in the UE, switching to the second communication system;
in the UE, performing a radio link initial access and basic capability negotiation with the second communication system;
in the second communication system, providing an unsolicited registration response message to the UE via the GANC in response to the radio link initial access and basic capability negotiation; and
in the UE, in response to the unsolicited registration response message, performing a registration update to the GANC and establishing the RTP path to receive the CS service from the GANC.
In the method, the first communication system is a long term evolution (LTE) communication system and the second communication system is a worldwide interoperability for microwave access (WiMAX) communication system.

The above and other objects and features of the present invention will become apparent from the following description of embodiments, given in conjunction with the accompanying drawings, in which:
Fig. 1 is a flowchart illustrating the sequential process of receiving CS data in performing a handover from a WiMAX access network to an LTE access network according to the prior art;
Fig. 2 is a flowchart illustrating the sequential process of receiving CS data in performing a handover from the LTE communication system to the WiMAX communication system according to the prior art;
Fig. 3 illustrates a block diagram of a heterogeneous communication system for providing a CS service in accordance with an embodiment of the present invention; and
Fig. 4A and Fig. 4B, which is a continuation of Fig. 4A, are a detailed flowchart illustrating a handover method in a heterogeneous communication system in accordance with an embodiment of the present invention.

Hereinafter, embodiments of the present invention will be described in detail with the accompanying drawings, which forms a part thereof.

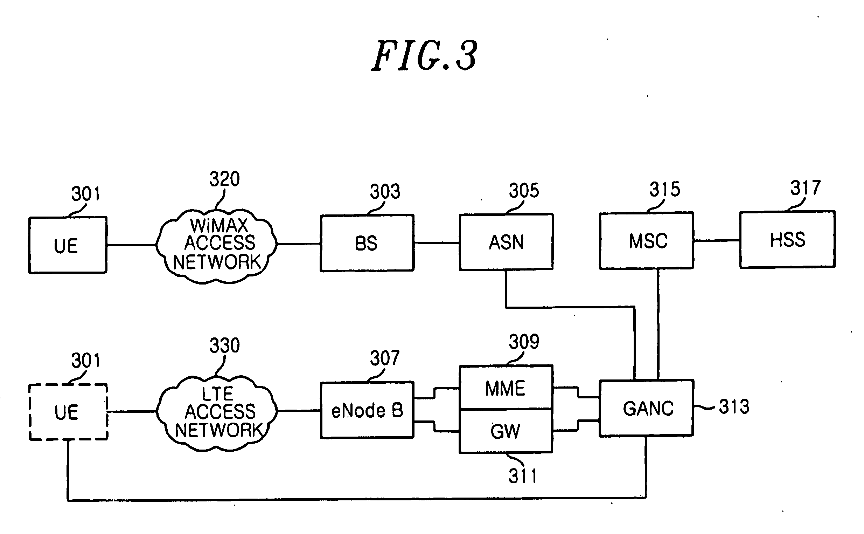

Fig. 3 illustrates a block diagram of a heterogeneous communication system for providing a CS service in accordance with an embodiment of the present invention. The heterogeneous communication system includes a WiMAX communication system, an LTR communication system and a generic access network controller (GANC) 313. The WiMAX communication system includes a base station (BS) 303, an abstract syntax notation (ASN) 305, a mobile switching center (MSC) 315, and a home subscriber server (HSS) 317. The LTE communication system includes an eNodeB 307, a mobility management entity (MME) 309, and a gateway (GW) 311. Communication may be performed between the BS 303 and a user equipment (UE) 301 through a WiMAX access network 320, or communication may be performed between the eNodeB 307 and the UE 301 through an LTE access network 330.

The UE 301 may receive a CS service from the MSC 315 through the GANC 313, the ASN 305 and the BS 303 in a state that it is connected to the WiMAX access network 320 at an early stage. On the contrary, the UE 301 may receive a CS service from the MSC 315 through the GANC 313, the GW 311 and the eNodeB 307 in a state that is connected to the LTE communication system at an early stage.

The UE 301 checks whether to perform a handover to the LTE access network 330 while receiving the CS service through the WiMAX access network 320, or whether to perform handover to the WiMAX access network 320 while receiving a CS service through the LTE access network 330.

In case where the UE 301 performs the handover to the LTE access network 330 based on the check result in which the condition of the WiMAX access network 320 is currently not so good as to provide the CS service, the UE 301 performs a process of accessing the LTE access network 330 by transmitting an uplink direct transmission message including attach request message to the GANC 313 through the BS 303 and the ASN 305 in order to establish a handover connection. That is, the UE 301 transmits the uplink direct transmission message including the handover request information to the GANC 313 through the BS 303 and the ASN 305 to perform the handover to the LTE access network 330 in advance.

The UE 301 disconnects the connection to the WiMAX access network 320 through a handover command message included in a downlink direct transmission message received from the GANC 313 through the ASN 305 and the BS 303, switches to connect to the LTE access network 330, and then transmits a handover complete notification message to the MME 309 through the eNodeB 307 to inform that handover has been completed.

The UE 301 updates a registration to the GANC 313, establishes an RTP path between the UE 301 and the GANC 313, and then receives the CS service from the MSC 315 through the GANC, the GW 311 and the eNodeB 307. Here, the establishment of the RTP path is generated at the same time when the UE 301 transmits the handover complete notification message to the MME 309.

Meanwhile, in case where the UE 301 performs handover to the WiMAX access network 320 based on the check result in which the condition of the LTE access network 330 is currently not so good as to provide the CS service, the UE 301 exchanges a authentication message required for UE authenticating in the eNodeB 307 and the GW 311 with the GANC 313 through the current serving LTE access network 330.

When the UE 301 delivers a handover preparation message to the eNodeB 307 through the LTE access network 330, context information regarding the UE 301 is delivered from the eNodeB 307 to the BS 303 of the WiMAX access network 320 through the GANC 313, so that a traffic connection for the CS service is established in advance between the BS 303 and the GW 311. In the state that the traffic connection is established, the UE 301 transmits a handover preparation message to the BS 303 through the WiMAX access network 320, and after a certain time lapses or immediately when the handover preparation message is transmitted, the UE 301 disconnects a connection to the LTE access network 330 and is switched to the WiMAX access network 320 to perform a synchronization and ranging for a radio link initial connection to the BS 303 and a basic capability negotiation with the BS. Thereafter, the UE 301 receives an unsolicited registration response message in response, updates a registration to the GANC 313 through the BS 303 and the ASN 305, establishes an RTP path, and then receives the CS service from the MSC 315 through the GANC 313, the ASN 305, and the BS 303.

When the BS 303 performs the synchronization and ranging and the basic capability negotiation with the UE 301 through the WiMAX access network 320, the BS 303 transmits the unsolicited registration response message to the UE 301 through the WiMAX access network 320.

The MME 309 recognizes that the handover is performed to the LTE access network 330 in response to the attach request message input from the GANC 313, and provides an authentication request message to the GANC 313.

In addition, the MME 309 performs a location updating and a subscriber data retrieval to the HSS 317 through the GANC 313 and the MSC 315, performs a default bearer setup through the GW 311, and establishes an RRC connection through the GANC 313 in establishing the RRC between the UE 301 and the LTE access network 330.

Also, the MME 309 performs a resource reservation operation (e.g., an EPS bearer setup operation, etc.) for the CS service in response to a relocation request message provided from the GANC 313 and then provides a relocation command message to the GANC 313.

The GANC 313 provides the attach request message included in the uplink direct transmission message received from the UE 301 through the BS 303 and the ASN 305 to the MME 309.

Further, the GANC 313 may provide a control to perform an authentication process between the UE 301 and the GANC 313 in response to an authentication request message input from the MME 309. In this case, the GANC 313 provides controls to transmit and receive the authentication process between the UE 301 and the HSS 317 through the MME 309.

Also, the GANC 313 generates a relocation request message based on the handover request information included in the uplink direct transmission message received from the UE 301 through the BS 303 and the ASN 305, and provides the relocation request message to the MME 309.

The GANC 313 generates the handover command message based on the relocation command message from the MME 309, incorporates the handover command message into a downlink direct transmission message, and then transmits the downlink direct transmission message to the UE 301 through the ASN 305 and the BS 303.

Thus, the GANC 313 provides a control to transmit and receive an authentication message between the UE 301 and the HSS 317 through the eNodeB 307, the GW 311 and the MSC 315, and when the authentication process is successfully completed, the GANC 313 delivers context information regarding the UE 301 to the BS 303 of the WiMAX access network 320.

Meanwhile, when the UE 301 does not perform the handover due to failure of a handover prediction, the GANC 313 requests the HSS 317 to release resources previously reserved for a network predicted to perform handover thereto and delete relevant UE location information if a register update message is not received from the UE 301 within a preset time. The HSS 317 may release the previously reserved resources and delete the relevant UE location information in response to the request from the GANC 313.

Thus, in the present invention, because the duration of discontinuation of the CS service can be reduced in performing handover in the IP-based 3GPP-LTE and an IEEE-WiMAX convergence network in which two or more heterogeneous wireless communication techniques coexist by performing the authentication and registration process in advance through the GANC, a high quality service can be provided to the UE.

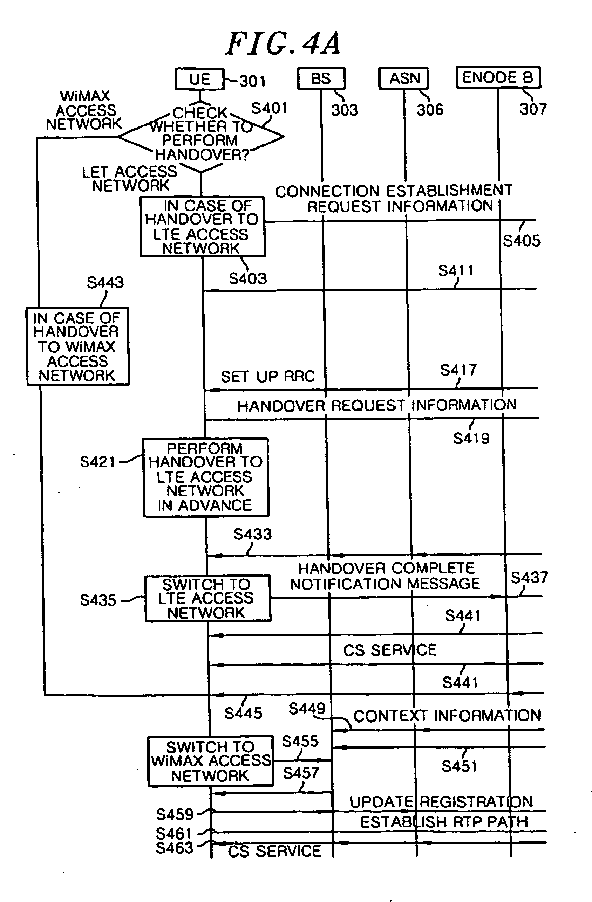

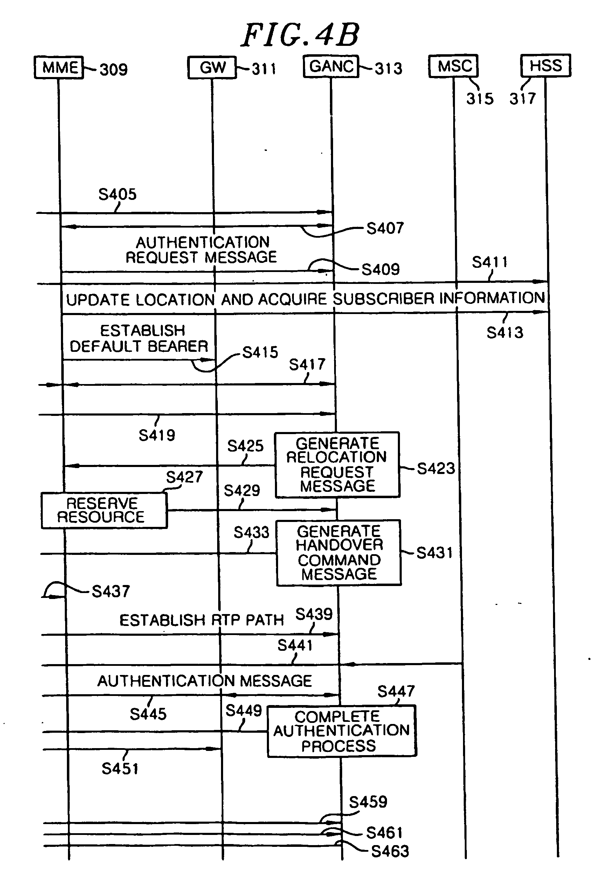

Now, the handover process between the heterogeneous network of the LTE and the WiMAX communication system in accordance with the embodiment of the present invention having the configuration as described above will be explained with reference to Fig. 4.

Fig. 4 illustrates a flowchart illustrating a handover method in a heterogeneous communication system of an LTE and a WiMAX communication system in accordance with an embodiment of the present invention.

The UE 301 is in a state that is connected to the WiMAX access network 320 at the early stage, and the UE 301 receives a CS service from the serving MSC 315 through the GANC 313, the ASN 305 and the BS 303.

The UE 301 determines whether to perform a handover to the LTE access network 330 while receiving the CS service through the WiMAX access network 320 by checking whether the condition of the WiMAX access network 320 is currently not so good as to provide the CS service.

In case where the UE 301 performs the handover to the LTE access network 330 in step S403 based on the check result in step S401, the UE 301 then transmits an uplink direct transmission message including attach request message to the GANC 313 through the BS 303 and the ASN 305 in order to establish a handover connection in step S405.

The GANC 313 provides the attach request message included in the uplink direct transmission message received from the UE 301 through the BS 303 and the ASN 305 to the MME 309 in step S407.

The MME 309 recognizes that the handover is performed to the LTE access network 330 based on the attach request message from the GANC 313, and provides an authentication request message to the GANC 313 in step S409.

The GANC 313 provides a control to perform an authentication process between the UE 301 and the GANC 313 in response to the authentication request message from the MME 309 in step S411. In this case, the GANC 313 controls to execute the authentication process between the UE 301 and the HSS 317 through the MME 309.

Then, the MME 309 performs location updating and subscriber data retrieval to the HSS 317 through the GANC 313 and the MSC 315 in step S413, performs a default bearer setup through the GW 311 in step S415, and then establishes an RRC connection between the UE 301 and the LTE access network 330 through the GANC 313 in step S417.

Thereafter, the UE 301 transmits the uplink direct transmission message including the handover request information to the GANC 313 through the BS 303 and the ASN 305 to perform the handover to the LTE access network 330 in advance in step S421.

The GANC 313 generates a relocation request message based on handover request information included in the uplink direct transmission message received from the UE 301 through the BS 303 and the ASN 305 in step S423, and provides the relocation request message to the MME 309 in step S425.

The MME 309 performs a resource reservation operation, e.g., an EPS bearer setup procedure, for the CS service in response to the relocation request message from the GANC 313 in step S427 and then provides a relocation command message to the GANC 313 in step S429.

The GANC 313 generates a handover command message based on the relocation command message from the MME 309 in step S431, incorporates the generated handover command message into a downlink direct transmission message, and then transmits the same to the UE 301 through the ASN 305 and the BS 303 in step S433.

The UE 301 cuts off the connection to the WiMAX access network 320 depending on the handover command message included in the downlink direct transmission message received from the GANC 313, switches to connect to the LTE access network 330 in step S435, and then transmits a handover complete notification message to the MME 309 through the eNodeB 307 to inform that handover has been completed in step S437.

Finally, the UE 301 updates a registration to the GANC 313, establishes an RTP path between the UE 301 and the GANC 313 in step S439, and then receives the CS service from the MSC 315 through the GANC 313, the GW 311 and the eNodeB 307 in step S441.

Meanwhile, in a state that the UE 301 is connected to the LTE access network 330 at an early stage while receiving the CS service from the registered MSC 315 through the GANC 313, the GW 311 and the eNodeB 307, in case where the UE 301 performs a handover to the WiMAX access network 320 in step S443 based on the check result in step S401 in which the condition of the LTE access network 330 is currently not so good as to provide the CS service, the UE 301 exchanges a authentication message required for authenticating thereof by the eNodeB 307 and the GW 311 with the GANC 313 through the LTE network 330, the eNodeB 307 and the GW 311 in step S445.

The GANC 313 provides a control to transmit and receive an authentication message between the UE 301 and the HSS 317 through the eNodeB 307 and the GW 311, and in turn the MSC 315 to perform an UE authentication. Thereafter, when the UE authentication is successfully completed in step S447, the GANC 313 transmits context information regarding the UE 301 to the BS 303 of the WiMAX access network 320 in step S449.

Next, the context information is transmitted by the GANC 313 to the BS 303 of the WiMAX access network 320, and a traffic connection for the CS service can be established in advance between the BS 303 and the GW 311 in step S451. However, when the UE 301 does not perform the handover due to failure of a handover prediction, the GANC 313 requests the HSS 317 to release resources previously reserved for a network expected to perform handover thereto and delete relevant UE location information if a register update message is not received from the UE 301 within a preset time.

Also, as the context information is transmitted to the BS 303 through the WiMAX access network 320 by the GANC 313, a traffic connection for the CS service is established in advance between the BS 303 and the GW 311. In the state that the traffic connection is established, the UE 301 transmits a handover preparation message to the BS 303 through the WiMAX access network 320, and after a certain time lapses or immediately when the handover preparation message is transmitted, the UE 301 disconnects the connection to the LTE network 330 and is switched to the WiMAX access network 320 in step S453 to perform a radio link initial connection to the BS 303 and a basic capability negotiation with the BS 303 in step S455.

When the BS 303 performs the radio link initial connection and basic capability negotiation with the UE 301 through the WiMAX access network 320, it transmits an unsolicited registration response message to the UE 301 through the WiMAX access network 320 in step S457.

The UE 301 receives the unsolicited registration response message in response to the performing of the radio link initial connection and basic capability negotiation from the BS 303, updates a registration to the GANC 313 through the BS 303 and the ASN 305 in step S459, establishes an RTP path in step S461, and then receives the CS service from the MSC 315 through the GANC 313, the ASN 305, and the BS 303 in step S463.

The handover method between heterogeneous networks in accordance with various embodiments of the present invention may be implemented with software codes in a computer-readable storage medium that can be executed by a computer system. The computer-readable storage medium may include various types of storage devices including a ROM, a RAM, a CD-ROM, a magnetic tape, a floppy disk, an optical data storage device, carrier waves (e.g., transmission via the Internet), and the like. Further, the software codes or programs may be distributed in computer systems connected over a communication network and executed in order to perform the functions of the present invention.

As described above, in accordance with the present invention, the authentication and registration process is performed in advance by the GANC, thereby reducing the discontinuation duration of the CS service in performing handover in a heterogeneous communication system of the IP-based 3GPP-LTE and an IEEE-WiMAX communication system, and a high quality service may be provided to users through a UE such as a mobile terminal, a personal digital assistance (PDA), a notebook computer, a modem, and the like.

In addition, in accordance with the present invention, the UE performs switching to the LTE access network or the WiMAX access network, immediately updates a registration to the GANC and establishes an RTP path between the UE and the GANC, rather than performing a registration process, resource reservation, authentication, and the like. Accordingly, the discontinuation duration of the CS service can be drastically reduced to enhance user satisfaction about quality of service.

While the invention has been shown and described with respect to the particular embodiments, it will be understood by those skilled in the art that various changes and modification may be made without departing the scope of the present invention as defined in the following claims.

## Claims

1. A heterogeneous communication system of performing a handover from a first communication system to a second communication system integrated therein, the heterogeneous communication system **characterized by** comprising:
a user equipment, UE, (301) adapted to request a handover connection establishment to the second communication system while receiving a CS (Circuit Switched) service from the first communication system, request an authentication to the first communication system, perform the handover to the second communication system after the authentication, and then disconnect a connection with the first communication system and switch to the second communication system in response to a handover command message, sequentially; and
a generic access network controller, GANC, (313) adapted to deliver the request of the handover connection establishment to the second communication system, notify the procedure of the authentication to the second communication system, and then provide the handover command message to the UE (301) to switch to the second communication system, thereby providing the CS service to the UE (301) through the second communication system, sequentially.

2. The heterogeneous communication system of claim 1, wherein the UE (301) is further adapted to perform a registration update and subscriber data retrieval on the first communication system via GANC (313), transmit a handover complete notification message to the second communication system to notify a completion of the handover and establish a RTP path with the GANC (313) after the completion of the authentication.

3. The heterogeneous communication system of claim 2, wherein the GANC (313) is further adapted to generate a relocation request message based on the handover request received from the UE (301) to provide the relocation request message to the second communication system, and generate the handover command message based on a relocation command message provided from the second communication system in response to the relocation request message.

4. The heterogeneous communication system of claim 2, wherein the second communication system is adapted to provide an authentication request message to the GANC (313); perform a location update and subscriber information retrieval on the first communication system through the GANC (313); set up a default bearer; establish an RRC connection between the UE (301) and the second communication system through the GANC (313); establish an evolved packet system (EPS) bearer in response to the relocation request message from the GANC (313); and provide the relocation command message to the GANC (313).

5. The heterogeneous communication system of claim 1, wherein when the UE (301) cannot perform the handover from the first communication network to the second communication network, the GANC (313) is adapted to request the second communication system to release resources previously reserved for the handover and delete relevant UE location information.

6. The heterogeneous communication system of claim 1. wherein the first communication system is a worldwide interoperability for microwave access, WiMAX, communication system and the second communication system is a long term evolution, LTE, communication system.

7. A heterogeneous communication system of performing a handover from a first communication system to a second communication system integrated therein, the heterogeneous communications system **characterized by** comprising:
a user equipment, UE, (301) adapted to form an authentication with the second communication system, perform a handover preparation to the second communication system to establish a traffic connection for a CS, Circuit Switched, service, disconnect a connection with the first communication system and switch to the second communication system, and then perform a radio link initial access and basic capability negotiation with the second communication system, sequentially; and
a generic access network controller, GANC, (313) adapted to deliver a message related to the authentication to the second communication system, after the authentication is performed, transmit a context information for the UE (301) to the second communication system to establish the traffic connection, and then perform a registration update and establish the RTP path with the UE (301) to provide the CS service, thereby providing the CS service to the UE (301) through the second communication system, sequentially.

8. The heterogeneous communication system of claim 7, wherein the GANC (313) is further adapted to transfer context information for the UE (301) to the second communication system after the completion of the authentication.

9. The heterogeneous communication system of claim 7, wherein when the UE (301) cannot perform handover from the first communication system to the second communication system, the GANC (313) is adapted to request the second communication system to release resources previously reserved for the handover and delete relevant UE location information.

10. The heterogeneous communication system of claim 7, wherein the first communication system is a long term evolution, LTE, communication system and the second communication system is a worldwide interoperability for microwave access, WiMAX, communication system.

11. A method for performing a handover from a first communication system to a second communication system in a heterogeneous communication system having a generic access network controller, GANC, (313), the method **characterized by** comprising the sequential steps of:
in the GANC (313), delivering a request of a handover connection establishment from a user equipment, UE, (301), which receives a CS, Circuit Switched, service from the first communication system, to the second communication system;
in the GANC (313), notifying an authentication between the UE (301) and the first communication system to the second communication via the GANC (313);
in the UE (301), performing the handover of the UE (301) to the second communication system through the first communication system after a connection to the second communication system is completed;
in the UE (301), in response to a handover command message, disconnecting a connection to the first communication system and switching to the second communication system; and
in the UE (301), performing a resource reservation to the second communication system to receive the CS service from the first communication system through the second communication system via the GANC (313).

12. The method of claim 11, further comprising:
in the second communication system, performing location update and subscriber data retrieval on the first communication system via the GANC (313);
in the UE (301), performing a default bearer setup on the second communication system via the GANC (313); and
in the UE (301), establishing an radio resource control (RRC) connection with the second communication system via the GANC (313).

13. The method of claim 11, wherein the first communication system is a worldwide interoperability for microwave access, WiMAX communication system and the second communication system is a long term evolution, LTE communication system.

14. A method for performing a handover from a first communication system to a second communication system in a heterogeneous communication system having a generic access network controller, GANC, (313), the method **characterized by** comprising the sequential steps of:
in the GANC (313), delivering an authentication-related message between the second communication system and a user equipment, UE, (301), which receives a CS, Circuit Switched, service from the first communication system;
in the UE (301), delivering a handover preparation message to the second communication system via the GANC (313) to establish a traffic connection for the CS service after the authentication;
in the UE (301), switching to the second communication system,
in the UE (301), performing a radio link initial access and basic capability negotiation with the second communication system;
in the second communication system, providing an unsolicited registration response message to the UE (301) via the GANC (313) in response to the radio link initial access and basic capability negotiation; and
in the UE (301), in response to the unsolicited registration response message, performing a registration update to the GANC (313) and establishing the RTP path to receive the CS service from the GANC (313).

15. The method of claim 14, wherein the first communication system is a long term evolution, LTE, communication system and the second communication system is a worldwide interoperability for microwave access, WiMAX, communication system.

## Patentansprüche

1. Heterogenes Kommunikationssystem zur Durchführung einer Übergabe von einem ersten Kommunikationssystem zu einem zweiten Kommunikationssystem, die darin integriert sind, wobei das heterogene Kommunikationssystem **gekennzeichnet ist durch** Umfassen von:
einem Anwendergerät, UE, (301), das ausgestaltet ist, sequentiell eine Übergabeverbindungseinrichtung zu dem zweiten Kommunikationssystem anzufordern, während es einen CS-Dienst, leitungsvermittelten Dienst, von dem ersten Kommunikationssystem empfängt, eine Authentifizierung zu dem ersten Kommunikationssystem anzufordern, die Übergabe zu dem zweiten Kommunikationssystem nach der Authentifizierung durchzuführen und dann eine Verbindung mit dem ersten Kommunikationssystem zu trennen und zu dem zweiten Kommunikationssystem in Reaktion auf eine Übergabebefehlsnachricht zu schalten; und
einer generischen Zugangsnetzwerksteuerung, GANC, (313), die ausgestaltet ist, sequentiell die Anfrage der Übergabeverbindungseinrichtung zu dem zweiten Kommunikationssystem zu liefern, das Verfahren der Authentifizierung dem zweiten Kommunikationssystem zur Kenntnis zu bringen und dann die Übergabebefehlsnachricht dem UE (301) zum Schalten des zweiten Kommunikationssystems bereitzustellen, wodurch der CS-Dienst dem UE (301) **durch** das zweite Kommunikationssystem bereitgestellt wird.

2. Heterogenes Kommunikationssystem nach Anspruch 1, bei welchem das UE (301) des Weiteren ausgestaltet ist, eine Registrierungsaktualisierung und einen Teilnehmerdatenbezug an dem ersten Kommunikationssystem über die GANC (313) durchzuführen, eine Übergabevollständigkeitsbenachrichtigung dem zweiten Kommunikationssystem zur Bekanntgabe einer Vervollständigung der Übergabe zu übertragen und einen RTP-Pfad mit der GANC (313) nach der Vervollständigung der Authentifizierung einzurichten.

3. Heterogenes Kommunikationssystem nach Anspruch 2, bei welchem die GANC (313) des Weiteren ausgestaltet ist, eine Verlegungsanfragenachricht basierend auf der Übergabeanfrage zu erzeugen, die von dem UE (301) empfangen wird, um eine Verlegungsanfragenachricht dem zweiten Kommunikationssystem bereitzustellen, und die Übergabebefehlsnachricht basierend auf einer Verlegungsbefehlsnachricht zu erzeugen, die von dem zweiten Kommunikationssystem in Reaktion auf die Verlegungsanfragenachricht bereitgestellt wird.

4. Heterogenes Kommunikationssystem nach Anspruch 2, bei welchem das zweite Kommunikationssystem ausgestaltet ist, eine Authentifizierungsanfragenachricht der GANC (313) bereitzustellen; eine Standortaktualisierung und eine Teilnehmerinformationsabfrage über das erste Kommunikationssystem durch die GANC (313) durchzuführen; einen Standardträger einzurichten; eine RRC-Verbindung zwischen dem UE (301) und dem zweiten Kommunikationssystem durch die GANC (313) einzurichten; einen "Evolved-Packet-System"-Träger (EPS) in Reaktion auf die Verlegungsanfragenachricht von der GANC (313) einzurichten und die Verlegungsbefehlsnachricht der GANC (313) bereitzustellen.

5. Heterogenes Kommunikationssystem nach Anspruch 1, bei welchem wenn das UE (301) nicht die Übergabe von dem ersten Kommunikationsnetzwerk zu dem zweiten Kommunikationsnetzwerk durchführen kann, die GANC (313) ausgestaltet ist, das zweite Kommunikationssystem aufzufordern, Ressourcen freizugeben, die vorher für die Übergabe reserviert waren, und eine relevante UE-Standortinformation zu löschen.

6. Heterogenes Kommunikationssystem nach Anspruch 1, bei welchem das erste Kommunikationssystem ein "Worldwide Interoperability For Microwave Access"-Kommunikationssystem, WiMAX, ist und das zweite Kommunikationssystem ein "Long Term Evolution"-Kommunikationssystem, LTE, ist.

7. Heterogenes Kommunikationssystem zum Durchführen einer Übergabe von einem ersten Kommunikationssystem zu einem zweiten Kommunikationssystem, die darin integriert sind, wobei das heterogene Kommunikationssystem **gekennzeichnet ist durch** Umfassen von:
einem Anwendergerät, UE, (301), das ausgestaltet ist, sequentiell eine Authentifizierung mit dem zweiten Kommunikationssystem auszubilden, eine Übergabevorbereitung zu dem zweiten Kommunikationssystem durchzuführen, um eine Verkehrsverbindung für einen CS-Dienst, leitungsvermittelten Dienst, einzurichten, eine Verbindung mit dem ersten Kommunikationssystem zu trennen und zu dem zweiten Kommunikationssystem zu schalten und dann einen Funkverbindungsanfangszugang und eine Basisfähigkeitsverhandlung mit dem zweiten Kommunikationssystem durchzuführen; und
einer generischen Zugangsnetzwerksteuerung, GANC, (313), die ausgestaltet ist, sequentiell eine Nachricht zu liefern, die sich auf die Authentifizierung zu dem zweiten Kommunikationssystem bezieht, nachdem die Authentifizierung durchgeführt worden ist, eine Kontextinformation für das UE (301) zu dem zweiten Kommunikationssystem zu übertragen, um die Verkehrsverbindung einzurichten, und dann eine Registrierungsaktualisierung durchzuführen und den RTP-Pfad mit dem UE (301) einzurichten, um den CS-Dienst bereitzustellen, wodurch der CS-Dienst dem UE (301) **durch** das zweite Kommunikationssystem bereitgestellt wird.

8. Heterogenes Kommunikationssystem nach Anspruch 7, bei welchem die GANC (313) des Weiteren ausgestaltet ist, eine Kontextinformation für das UE (301) zu dem zweiten Kommunikationssystem nach Vollendung der Authentifizierung zu übertragen.

9. Heterogenes Kommunikationssystem nach Anspruch 7, bei welchem, wenn das UE (301) die Übergabe von dem ersten Kommunikationssystem zu dem zweiten Kommunikationssystem nicht durchführen kann, die GANC (313) ausgestaltet ist, das zweite Kommunikationssystem aufzufordern, Ressourcen freizugeben, die vorher für die Übergabe reserviert waren, und eine relevante UE-Standortinformation zu löschen.

10. Heterogenes Kommunikationssystem nach Anspruch 7, bei welchem das erste Kommunikationssystem ein "Long Term Evolution"-Kommunikationssystem, LTE, ist und das zweite Kommunikationssystem ein "Worldwide Interoperability For Microwave Access"-Kommunikationssystem, WiMAX, ist.

11. Verfahren zum Durchführen einer Übergabe von einem ersten Kommunikationssystem zu einem zweiten Kommunikationssystem in einem heterogenen Kommunikationssystem, das eine generische Zugangsnetzwerksteuerung, GANC, (313) aufweist, wobei das Verfahren **gekennzeichnet ist durch** Umfassen der sequentiellen Schritte:
in der GANC (313), Liefern einer Anfrage einer Übergabeverbindungseinrichtung von einem Anwendergerät, UE, (301), das einen CS-Dienst, leitungsvermittelten Dienst, von dem ersten Kommunikationssystem empfängt, zu dem zweiten Kommunikationssystem;
in der GANC (313), zur Kenntnis Bringen einer Authentifizierung zwischen dem UE (301) und dem ersten Kommunikationssystem zu dem zweiten Kommunikationssystem über die GANC (313);
in dem UE (301), Durchführen der Übergabe von dem UE (301) zu dem zweiten Kommunikationssystem **durch** das erste Kommunikationssystem nachdem eine Verbindung zu dem zweiten Kommunikationssystem abgeschlossen ist;
in dem UE (301), in Reaktion auf eine Übergabebefehlsnachricht, Trennen einer Verbindung zu dem ersten Kommunikationssystem und Schalten zu dem zweiten Kommunikationssystem; und
in dem UE (301), Durchführen einer Ressourcenreservierung zu dem zweiten Kommunikationssystem zum Empfangen des CS-Dienstes von dem ersten Kommunikationssystem **durch** das zweite Kommunikationssystem über die GANC (313).

12. Verfahren nach Anspruch 11, des Weiteren umfassend:
in dem zweiten Kommunikationssystem, Durchführen einer Standortaktualisierung und eines Teilnehmerdatenbezugs an dem ersten Kommunikationssystem über die GANC (313);
in dem UE (301), Durchführen einer Standardträgereinrichtung an dem zweiten Kommunikationssystem über die GANC (313); und
in dem UE (301), Einrichten einer Funkressourcensteuerung-Verbindung, RRC-Verbindung, mit dem zweiten Kommunikationssystem über die GANC (313).

13. Verfahren nach Anspruch 11, bei welchem das erste Kommunikationssystem ein "Worldwide Interoperability For Microwave Access"-Kommunikationssystem, WiMAX, ist und das zweite Kommunikationssystem ein "Long Term Evolution"-Kommunikationssystem, LTE, ist.

14. Verfahren zum Durchführen einer Übergabe von einem ersten Kommunikationssystem zu einem zweiten Kommunikationssystem in einem heterogenen Kommunikationssystem, das eine generische Zugangsnetzwerksteuerung, GANC, (313) aufweist, wobei das Verfahren **gekennzeichnet ist durch** Umfassen der sequentiellen Schritte:
in der GANC (313), Liefern einer authentifizierungsbezogenen Nachricht zwischen dem zweiten Kommunikationssystem und einem Anwendergerät, UE, (301), das einen CS-Dienst, leitungsvermittelten Dienst, von dem ersten Kommunikationssystem empfängt;
in dem UE (301), Liefern einer Übergabevorbereitungsnachricht zu dem zweiten Kommunikationssystem über die GANC (313) zum Einrichten einer Verkehrsverbindung für den CS-Dienst nach der Authentifizierung;
in dem UE (301) Schalten zu dem zweiten Kommunikationssystem,
in dem UE (301) Durchführen eines Funkverbindungsanfangszugangs und einer Basisfähigkeitsverhandlung mit dem zweiten Kommunikationssystem;
in dem zweiten Kommunikationssystem Bereitstellen einer unaufgeforderten Registrierungsreaktionsnachricht zu dem UE (301) über die GANC (313) in Reaktion auf den Funkverbindungsanfangszugang und die Basisfähigkeitsverhandlung; und
in dem UE (301), in Reaktion auf die unaufgeforderte Registrierungsreaktionsnachricht, Durchführen einer Registrierungsaktualisierung an die GANC (313) und Einrichten des RTP-Pfads zum Empfangen des CS-Dienstes von der GANC (313).

15. Verfahren nach Anspruch 14, bei welchem das erste Kommunikationssystem ein "Long Term Evolution"-Kommunikationssystem, LTE, ist und das zweite Kommunikationssystem ein "Worldwide Interoperability for Microwave Access"-Kommunikationssystem, WiMAX, ist.

## Revendications

1. Système de communication hétérogène de réalisation d'un transfert d'un premier système de communication à un second système de communication intégré dans celui-ci, le système de communication hétérogène étant **caractérisé en ce qu'**il comprend :
un équipement utilisateur, UE, (301) adapté pour demander un établissement de connexion de transfert au second système de communication tout en recevant un service CS, Circuit Switched, à partir du premier système de communication, demander une authentification au premier système de communication, réaliser le transfert au second système de communication après l'authentification, et puis déconnecter une connexion avec le premier système de communication et réaliser la commutation au second système de communication en réponse à un message de commande de transfert, séquentiellement ; et
un contrôleur de réseau d'accès générique, GANC, (313) adapté pour livrer la demande de l'établissement de connexion de transfert au second système de communication, notifier la procédure de l'authentification au second système de communication, et puis fournir le message de commande de transfert à l'UE (301) pour réaliser la commutation au second système de communication, fournissant ainsi le service CS à l'UE (301) par l'intermédiaire du second système de communication, séquentiellement.

2. Système de communication hétérogène selon la revendication 1, dans lequel l'UE (301) est en outre adapté pour réaliser une actualisation d'enregistrement et une récupération de données d'abonné sur le premier système de communication par l'intermédiaire du GANC (313), transmettre un message de notification de transfert complet au second système de communication pour notifier un achèvement du transfert et établir un trajet RTP avec le GANC (313) après l'achèvement de l'authentification.

3. Système de communication hétérogène selon la revendication 2, dans lequel le GANC (313) est en outre adapté pour générer un message de demande de relocalisation en fonction de la demande de transfert reçue à partir de l'UE (301) pour fournir le message de demande de relocalisation au second système de communication, et générer le message de commande de transfert en fonction d'un message de commande de relocalisation fourni à partir du second système de communication en réponse au message de demande de relocalisation.

4. Système de communication hétérogène selon la revendication 2, dans lequel le second système de communication est adapté pour fournir un message de demande d'authentification au GANC (313) ; réaliser une actualisation de localisation et une récupération d'informations d'abonné sur le premier système de communication par l'intermédiaire du GANC (313) ; créer une porteuse par défaut ; établir une connexion RRC entre l'UE (301) et le second système de communication par l'intermédiaire du GANC (313) ; établir une porteuse de système par paquets évolué (EPS) en réponse au message de demande de relocalisation à partir du GANC (313) ; et fournir le message de commande de relocalisation au GANC (313).

5. Système de communication hétérogène selon la revendication 1, dans lequel, lorsque l'UE (301) ne peut pas réaliser le transfert du premier système de communication au second système de communication, le GANC (313) est adapté pour demander au second système de communication de libérer des ressources auparavant réservées pour le transfert et supprimer des informations de localisation d'UE pertinentes.

6. Système de communication hétérogène selon la revendication 1, dans lequel le premier système de communication est une interopérabilité mondiale pour système de communication à accès hyperfréquence, WiMAX, et le second système de communication est un système de communication d'évolution à long terme, LTE.

7. Système de communication hétérogène de réalisation d'un transfert d'un premier système de communication à un second système de communication intégré dans celui-ci, le système de communication hétérogène étant **caractérisé en ce qu'**il comprend :
un équipement utilisateur, UE, (301) adapté pour former une authentification avec le second système de communication, réaliser une préparation de transfert au second système de communication pour établir une connexion de trafic pour un service CS, Circuit Switched, déconnecter une connexion avec le premier système de communication et réaliser une commutation au second système de communication, et puis réaliser un accès initial par liaison radio et une négociation de capacité de base avec le second système de communication, séquentiellement ; et
un contrôleur de réseau d'accès générique (GANC) (313) adapté pour livrer un message connexe à l'authentification au second système de communication, après que l'authentification est réalisée, transmettre une information de contexte pour l'UE (301) au second système de communication pour établir la connexion de trafic, et puis réaliser une actualisation d'enregistrement et établir le trajet RTP avec l'UE (301) pour fournir le service CS, fournissant ainsi le service CS à l'UE (301) par l'intermédiaire du second système de communication, séquentiellement.

8. Système de communication hétérogène selon la revendication 7, dans lequel le GANC (313) est en outre adapté pour transférer l'information de contexte pour l'UE (301) au second système de communication après l'achèvement de l'authentification.

9. Système de communication hétérogène selon la revendication 7, dans lequel, lorsque l'UE (301) ne peut pas réaliser le transfert du premier système de communication au second système de communication, le GANC (313) est adapté pour demander au second système de communication de libérer des ressources auparavant réservées pour le transfert et supprimer des informations de localisation d'UE pertinentes.

10. Système de communication hétérogène selon la revendication 7, dans lequel le premier système de communication est un système de communication d'évolution à long terme, LTE et le second système de communication est une interopérabilité mondiale pour système de communication à accès hyperfréquence, WiMAX.

11. Méthode pour réaliser un transfert d'un premier système de communication à un second système de communication dans un système de communication hétérogène comportant un contrôleur de réseau d'accès générique, GANC, (313), la méthode étant **caractérisée en ce qu'**elle comprend les étapes séquentielles de :
dans le GANC (313), la livraison d'une demande d'un établissement de connexion de transfert à partir d'un équipement utilisateur, UE, (301), qui reçoit un service CS, Circuit Switched, du premier système de communication, au second système de communication ;
dans le GANC (313), la notification d'une authentification entre l'UE (301) et le premier système de communication au second système de communication par l'intermédiaire du GANC (313) ;
dans l'UE (301), la réalisation du transfert de l'UE (301) au second système de communication par l'intermédiaire du premier système de communication après qu'une connexion au second système de communication est achevée ;
dans l'UE (301), en réponse à un message de commande de transfert, la déconnexion d'une connexion au premier système de communication et la commutation au second système de communication ; et
dans l'UE (301), la réalisation d'une réservation de ressources au second système de communication pour recevoir le service CS à partir du premier système de communication par l'intermédiaire du second système de communication et du GANC (313).

12. Méthode selon la revendication 11, comprenant en outre :
dans le second système de communication, la réalisation d'une actualisation de localisation et d'une récupération de données d'abonné sur le premier système de communication par l'intermédiaire du GANC (313) ;
dans l'UE (301), la réalisation d'une création de porteuse par défaut sur le second système de communication par l'intermédiaire du GANC (313) ; et
dans l'UE (301), l'établissement d'une connexion de contrôle de ressources radio (RRC) avec le second système de communication par l'intermédiaire du GANC (313).

13. Méthode selon la revendication 11, dans laquelle le premier système de communication est une interopérabilité mondiale pour système de communication à accès hyperfréquence, WiMAX, et le second système de communication est un système de communication d'évolution à long terme, LTE.

14. Méthode pour réaliser un transfert d'un premier système de communication à un second système de communication dans un système de communication hétérogène comportant un contrôleur de réseau d'accès générique (GANC) (313), la méthode étant **caractérisée en ce qu'**elle comprend les étapes séquentielles de :
dans le GANC (313), la livraison d'un message connexe à l'authentification entre le second système de communication et un équipement utilisateur, UE, (301), qui reçoit un service CS, Circuit Switched, à partir du premier système de communication ;
dans l'UE (301), la livraison d'un message de préparation de transfert au second système de communication par l'intermédiaire du GANC (313) pour établir une connexion de trafic pour le service CS après l'authentification ;
dans l'UE (301), la commutation au second système de communication,
dans l'UE (301), la réalisation d'un accès initial par liaison radio et d'une négociation de capacité de base avec le second système de communication ;
dans le second système de communication, la fourniture d'un message de réponse d'enregistrement non sollicité à l'UE (301) par l'intermédiaire du GANC (313) en réponse à l'accès initial par liaison radio et la négociation de capacité de base ; et
dans l'UE (301), en réponse au message de réponse d'enregistrement non sollicité, la réalisation d'une actualisation d'enregistrement au GANC (313) et l'établissement du trajet RTP pour recevoir le service CS à partir du GANC (313).

15. Méthode selon la revendication 14, dans laquelle le premier système de communication est un système de communication d'évolution à long terme, LTE et le second système de communication est une interopérabilité mondiale pour système de communication à accès hyperfréquence, WiMAX.
